# EUROPÄISCHE PATENTANMELDUNG

(11) **EP 2 158 873 A1**
(43) Veröffentlichungstag der Anmeldung: **03.03.2010**
(21) Anmeldenummer: 08015419.8
(22) Anmeldetag: 01.09.2008
(51) Int. Cl.: A61C 17/22, A46B 9/04, A46B 7/04, A46B 9/06, A46B 15/00

(54) **Mundpflegeeinrichtung mit einem Funktionselement**

(71) Anmelder: Braun GmbH, 61476 Kronberg (DE)
(72) Erfinder: Stief, Christian, 60314 Frankfurt (DE); Haas, Martin, 65760 Eschborn (DE); Störkel, Jens, 60433 Frankfrt/Main (DE)

(57) **Zusammenfassung**

Mundpflegeeinrichtung mit einem Handgriff und einem damit verbundenen oder verbindbaren Kopf, an dem Mundpflegeelemente, insbesondere Reinigungsborsten und/oder Reinigungselastomer-Elemente, vorgesehen sind, wobei an einer Außenfläche des Kopfes ein elektrisch betreibbares Funktionselement angeordnet ist. Um eine einfache Handhabung der Mundpflegeeinrichtung trotz Unterbringung des Funktionselementes im Kopf zu gewährleisten wird vorgeschlagen, dass benachbart zum Funktionselement eine Rampe vorgesehen ist.

## Beschreibung

Die vorliegende Erfindung betrifft eine Mundpflegeeinrichtung mit den Merkmalen des Oberbegriffs des Anspruchs 1.

Aus dem Stand der Technik sind verschiedene Mundpflegeeinrichtungen, die insbesondere als Zahnbürsten ausgebildet sind, bekannt, die ein elektrisch betreibbares Funktionselement, wie z. B. eine Licht aussendende LED aufweisen. Hierbei wird in manchen Fällen angestrebt, die LED innerhalb des Zahnbürstenkopfes anzuordnen, damit dieses elektrisch betreibbare Funktionselement vollständig in den Zahnbürstenkunststoff eingekapselt ist und somit keine Probleme am Zahnbürstenkopf und der Elektrik im Zusammenhang mit der Feuchtigkeit gegeben ist.

Aus der WO 2008/059435 ist eine Mundpflegeeinrichtung der eingangs genannten Art bereits bekannt. Hierbei ist als elektrisch betreibbares Funktionselement eine LED im Zahnbürstenborstenfeld vorgesehen, die an einer Außenfläche des Kopfes im Borstenfeld vorspringend angeordnet ist. Das Bestreben, das Funktionselement so nah als möglich an den zu reinigenden Zähnen anzuordnen, kann jedoch zu Handhabungsproblemen bei der Mundpflege führen.

Es ist daher eine Aufgabe der vorliegenden Erfindung, eine Mundpflegeeinrichtung der eingangs genannten Art bereitzustellen, die eine Anordnung des elektrisch betreibbaren Funktionselementes am Kopf möglichst nahe an der Mundpflegestelle, wie z. B. den Zähnen oder der Zunge ermöglicht und andererseits eine sichere und komfortable Handhabung gewährleistet.

Diese Aufgabe wird durch eine Mundpflegeeinrichtung mit den Merkmalen des Anspruchs 1 gelöst.

Durch die Ausbildung einer Rampe direkt benachbart zum Funktionselement wird gewährleistet, dass an der Außenfläche des Kopfes angeordnete Funktionselemente auch dann nicht als störend empfunden werden, wenn die biegbaren Mundpflegeelemente, wie z. B. Reinigungsborsten, die Distanz zwischen der Außenfläche des Kopfes bzw. dem Funktionselement und dem Zahn während der Zahnreinigung oder der Zunge verringern. Bei übermäßigem Andrücken der Zahnbürste auf die Zähne kann so der Zahn über die Rampe gleiten, ohne dass dies zu einer Beeinträchtigung entlang den unterschiedlich vorspringenden Zähnen beim Zähneputzen führt.

Die Abstützung durch Mundpflegeelemente ist zudem dann besonders gering, wenn oberhalb des Funktionselementes ein Freibereich vorgesehen ist. Weiterhin ist das elektrisch betreibbare Funktionselement möglichst nah an den zu reinigenden Zähnen angeordnet und gleichzeitig die Dicke des Kopfes, der die Mundpflege-Elemente trägt, möglichst gering gehalten, so dass ein angenehmes Zähneputzen auch bei geringem Raum zwischen Backeninnenwand und Zahnaußenfläche möglich ist.

In weiterer vorteilhafter Ausbildung ist das Funktionselement benachbart und/oder zwischen den Mundpflegeelementen angeordnet. Somit ist sichergestellt, dass die Eigenschaften des Funktionselementes in der unmittelbaren Umgebung der Mundpflegeelemente zur Wirkung kommen. Alternativ kann das Funktionselement an einer anderen Außenseite des Kopfes angeordnet sein, an der keine Mundpflegeelemente angeordnet sind.

In weiterer vorteilhafter Ausgestaltung ist das Funktionselement als eine Licht aussendende Quelle, insbesondere als eine LED (light emitting diode), als ein Zahnpastaförderer, ein Sensor oder ein Aktuator für z. B. ein Geräusch oder eine Bewegung oder Vibration ausgebildet. Die LED kann beispielsweise als Energielieferant zur Aktivierung einer Substanz in der Zahnpasta verwendet werden. Andere Energie emittierende Funktionselemente kommen ebenfalls in Frage. Falls das Funktionselement als Zahnpastaförderer ausgebildet ist, so ist insbesondere der Zahnpastaauslaß benachbart zur Rampe angeordnet, während die Zahnpastafördereinrichtung in der Regel innerhalb des Kopfes oder eines benachbarten Bereiches angeordnet ist. Falls das Funktionselement als Sensor ausgebildet ist, so kommt beispielsweise ein Bewegungssensor in Frage, der die 3D-Bewegung des Kopfes mittels eines Neigungssensors, Geschwindigkeitssensors oder Beschleunigungssensors detektiert. Auch ein Andruckkraftsensor kommt hierfür in Frage.

In weiterer vorteilhafter Ausbildung sind die Mundpflegeelemente auf einem ersten - tieferen - Niveau mit der Außenfläche des Kopfes verbunden bzw. im Kopf eingestopft oder eingespritzt. Das Funktionselement erstreckt sich bis zu einem zweiten Niveau, das relativ zum ersten Niveau unterschiedlich, insbesondere erhöht, ist. Die Rampe ist dabei vorgesehen, um zumindest einen Teil des Höhenunterschieds zwischen diesem ersten und zweiten Niveau zu überbrücken. Somit ist gewährleistet, dass kein sprunghafter Höhenunterschied zwischen dem zweiten Niveau der Hochfläche des Funktionselementes und dem ersten Niveau des Kopfes gegeben ist.

In weiterer vorteilhafter Ausbildung werden das erste und das zweite Niveau durch eine schräge oder gewölbt ansteigende oder abfallende Fläche überbrückt. Die Mundpflegeelemente sind auf einer Ebene des Kopfes angeordnet bzw. befestigt und die Rampe ist zu dieser Ebene schräg oder gewölbt ansteigend oder abfallend ausgebildet. Falls die Mundpflegeelemente nicht auf einer einheitlich planen Ebene angeordnet sind, so gilt als erstes tieferes Niveau das Niveau, von dem die Rampe sich von einem Fußbereich in Richtung Borstenenden beginnt zu erstrecken.

In weiterer vorteilhafter Ausbildung ist das Funktionselement teilweise im Kopf und teilweise aus diesem vorspringend angeordnet. Die Rampe verhindert somit, dass zwischen der Außenfläche des Kopfes und dem Vorsprung des Funktionselementes ein 90°-Winkel eingeschlossen wird und überbrückt diesen Bereich unmittelbar angrenzend an das Funktionselement durch eine schräge oder gewölbte oder anders gekrümmte Fläche.

In weiterer vorteilhafter Ausbildung ist die Rampe und der Kopf aus der gleichen Kunststoffkomponente gespritzt. Dies ermöglicht eine besonders herstellungseinfache Lösung, weil eine weitere Kunststoffkomponente zusätzliche Komplexität beim Herstellprozeß hinzufügt. Unbenommen dieser einkomponentigen Ausbildung der Rampe relativ zum Kopf können weitere Kunststoffkomponenten am Kopf vorgesehen oder angespritzt sein.

In weiterer vorteilhafter Ausbildung ist die Rampe aus einer anderen Kunststoffkomponente als der Kopf gespritzt. Falls bei einem starken Andrücken der Zahnbürste gegen die Zähne die Rampe in Kontakt mit den Zähnen kommt, ist somit kein harter Stoß gegen die Zähne gegeben.

In weiterer vorteilhafter Ausbildung ist hierbei die Rampe aus Weichkunststoff, insbesondere einem Elastomer, wie TPE (thermoplastisches Elastomer) und der Kopf aus Hartkunststoff, insbesondere aus PP oder PE ausgebildet.

In weiterer vorteilhafter Ausbildung ist die Rampe zumindest in einer radialen Richtung unmittelbar um das Funktionselement herum angeordnet. Es ist also zumindest eine Rampe in einer Richtung in unmittelbarem Kontakt zum Funktionselement und benachbart zu diesem angeordnet. In einer Variante ist in zwei gegenüberliegenden Richtungen beidseitig zum Funktionselement je eine Rampe vorgesehen. In einer weiteren Variante ist eine Rampe radial in allen Richtungen um das Funktionselement herum angeordnet, wobei die Rampe in den verschiedenen radialen Richtungen unterschiedlich schräg oder gewölbt ausgebildet sein kann. Der Ort, an dem die Rampe vorgesehen ist, hängt unmittelbar mit der vorgesehenen Zahnputzbewegung zusammen, so dass entsprechend der vorgesehenen Putzrichtung eine Rampe benachbart zum Funktionselement vorgesehen ist. Die Anzahl der notwendigen Rampengeometrien um das Funktionselement herum kann auch abhängig von der übrigen Kopfgeometrie vorgesehen sein. Bei einer Außenfläche des Kopfes, auf der die Mundpflegeelemente angeordnet sind, die bereits zumindest zwei verschiedene Niveaus repräsentiert, ist es in einer Variante ausreichend, dass nur eine Rampe zwischen diesen beiden Höhenniveaus vorgesehen ist. Diese Variante führt jedoch zu unterschiedlich dicken Kopfgeometrien, so dass weitere Anpassungen an der Mundpflegeeinrichtung notwendig werden können.

In weiterer vorteilhafter Ausbildung ist das Funktionselement durch einen Preßsitz im Kopf befestigt. Der Außendurchmesser bzw. die Außengeometrie des Funktionselementes ist somit größer als die zu dessen Aufnahme vorgesehene Öffnung im Kopf. Dadurch ist auf einfache Weise eine gegen Flüssigkeit/Feuchtigkeit verkapselnde Lösung gegeben. Andere Arten der Befestigung des Funktionselementes im Kopf, beispielsweise durch Spritzen, Schweißen, Kleben oder Verschnappen sind ebenfalls möglich.

In weiterer vorteilhafter Ausbildung ist die Mundpflegeeinrichtung als eine manuelle oder elektrische Zahnbürste und/oder das Funktionselement als LED ausgebildet, die im Reinigungsbereich vorspringend angeordnet ist. Dieser durch das Funktionselement gebildete Vorsprung in der Außenfläche des Kopfes wird somit durch die Rampe aufgefüllt bzw. überbrückt. Als Außenfläche wird das Befestigungsniveau der Mundpflegeelemente angesehen, also z. B. die Bestopfungsfläche.

In weiterer vorteilhafter Ausbildung sind die Mundpflegeelemente auf dem Kopf oberhalb des Funktionselementes mit Abstand zu diesem angeordnet, so dass ein Freibereich ohne Mundpflegeelemente oberhalb des Funktionselementes - etwa auf der Höhe der Endungen der Mundpflegeelemente - vorgesehen ist. Bei Ausbildung des Funktionselementes als LED ist so gewährleistet, dass beispielsweise ein Lichtkegel mit einem Öffnungswinkel von zumindest 5 bis 30° überwiegend ungehindert von Reinigungsborsten oder Reinigungselastomer-Elementen den Zahn und die Zahnpasta beleuchtet. Bei Ausbildung des Funktionselementes als Zahnpastaförderer ist so eine ungehinderte Zufuhr der Zahnpasta auf den Zahn gewährleistet.

In weiterer vorteilhafter Ausbildung ist das Funktionselement und die Rampe einstückig ausgebildet. Insbesondere sind das Funktionselement und die Rampe stoffidentisch ausgebildet. In einer Variante bilden das Funktionselement und die Rampe eine vormontierte einstückige Einheit. In einer anderen Variante wird die Rampe und das Funktionselement separat gefertigt, aber durch Stoffidentität nach Zusammenfügung zu einem Stück.

In einer weiteren vorteilhaften Ausbildung schließt die Tangente an der schrägen oder gekrümmten oder gewölbten Rampe einen stumpfen Winkel mit der Außenfläche ein der zwischen 110 und 170° liegt. In einer alternativen Variante liegt dieser stumpfte Winkel zwischen 120 und 150°. Hierbei wird die Tangente in einer Schnittdarstellung der Rampe an diese angelegt, wobei die Tangente im Falle einer schräg-planen Fläche der Rampe mehrere Berührpunkte mit der Rampe hat. Somit ergibt sich im Umkehrschluß ein Steigungswinkel für die Rampe 5, der zwischen 10 und 70°, vorzugsweise zwischen 30 und 60° liegt.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung. Es zeigen:
- Fig. 1: eine perspektivische Darstellung des Kopfes einer Mundpflegeeinrichtung ohne Mundpflegeelemente gemäß einer Ausführungsform der Erfindung,
- Fig. 2: eine schematische Darstellung einer ersten Rampe,
- Fig. 3: eine schematische Darstellung einer zweiten Rampe,
- Fig. 4: eine Längsschnittdarstellung durch einen Kopf einer Mundpflegeeinrichtung mit elektrisch betreibbarem Funktionselement,
- Fig. 5: eine Draufsicht auf den Kopf der Mundpflegeeinrichtung nach Fig. 1 mit Mundpflegeelementen und LED,
- Fig. 6: einen Längsschnitt entlang der Linie A-A in Fig. 5,
- Fig. 7: eine Vergrößerung innerhalb des Kreises A in Fig. 6,
- Fig. 8: eine Querschnittsdarstellung durch den Kopf entlang der Linie C-C nach Fig. 5 und
- Fig. 9: eine Seitenansicht des Kopfes nach Fig. 5.

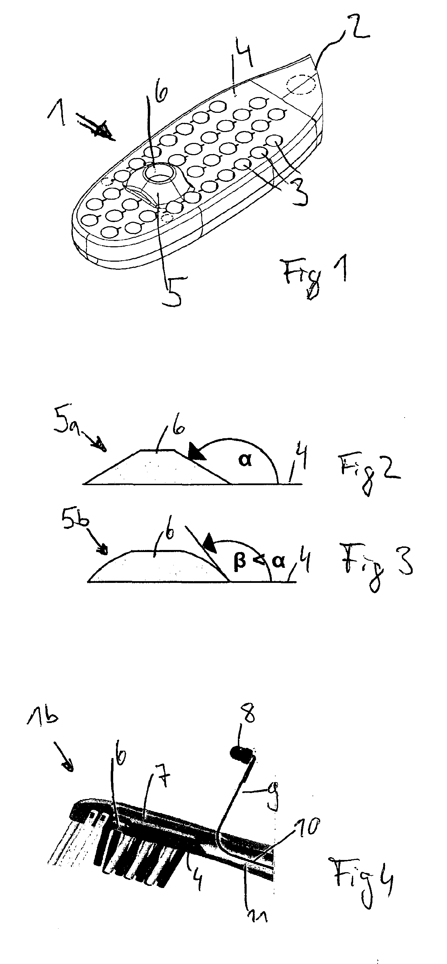

Fig. 1 zeigt eine perspektivische Draufsicht auf den Kopf einer Mundpflegeeinrichtung, die gemäß dieser Ausführungsform Teil einer manuellen Zahnbürste ist. An der schematisch dargestellten Abrißlinie 2 schließt sich, wie bei manuellen Zahnbürsten üblich, ein Halsabschnitt und ein Handgriff an (beide nicht dargestellt in den Figuren). Im Halsabschnitt sind elektrische Leitungen zum Betreiben eines elektrischen Funktionselementes verlegt, die zu einem Ein-/Ausschalter einer Stromversorgung und sonstigen notwendigen elektrischen Einrichtungen im Handgriff führen. Als Mundpflegeelemente sind für diese Ausführungsform Büschel von Reinigungsborsten vorgesehen, die in Öffnungen 3, in jeder bekannten Art und Weise im Kopf 1 befestigbar sind. Gemäß der vorliegenden Ausführungsform werden die Büschel von Reinigungsborsten nach dem Ankerbestopfungsverfahren im Kopf verankert. Andere Mundpflegeelemente, wie z.B. Reinigungselastomerelemente, die im Kopf befestigt oder angespritzt sind, können alternativ oder ergänzend vorgesehen sein. In Fig. 1 ist nur der Kopf ohne diese Mundpflegeelemente dargestellt, wie er nach dem Spritzgießvorgang aus dem Werkzeug erhalten wird. Die Außenfläche 4 des Kopfes, an der die Mundpflegeelemente befestigbar sind, weist bevorzugt in der vorderen Kopfhälfte bzw. im vorderen Drittel des distalen Endes des Kopfes eine Rampe 5 auf, die vom ebenen Niveau der Außenfläche in Richtung der Borstenenden vorspringend ausgebildet ist. Innerhalb der Rampe 5 ist eine Montageöffnung 6 für das elektrisch betreibbare Funktionselement vorgesehen. Das Funktionselement ist in Fig. 1 nicht dargestellt.

Die Figuren 2 und 3 zeigen schematisch zwei von einer Vielzahl von möglichen Ausgestaltungen der Rampe 5. Die Rampe 5a nach Fig. 2 ist umlaufend mit Schrägflächen versehen, so daß ein Kegelstumpf als Rampe entsteht. Eine Zahnfläche eines Benutzers, die durch starkes Herunterdrücken der umliegenden Borsten in Kontakt mit der Außenfläche 4 und der Rampe 5a gelangt, gleitet von der Außenfläche 4 zur Rampe über den stumpfen Winkel α, der zwischen 110° und 170° beträgt. Dem gegenüber zeigt Fig. 3 eine stumpf konvexe Ausbildung, bei der die Rampenaußenflächen nach außen gewölbt sind. Der anfängliche Winkel β zwischen der Außenfläche 4 und einer Tangente an die Rampe 5b am Startpunkt dieser Rampe durch die Außenfläche ist kleiner als der Winkel α mit Schrägflächen nach Fig. 2. Obwohl hier ebenfalls mit dem Winkel β nach Fig. 3 ein stumpfer Winkel bereitgestellt ist, der deutlich größer als 90° ist, gleitet an dieser Rampe eine Zahnflanke eines Benutzers weniger komfortabel entlang als bei einer Rampe mit größerem stumpfen Winkel α nach Fig. 2. Daher wird ein stumpfer Winkel über die Rampenfläche, bzw. ein allmählicher Übergang von der Außenfläche 4 zur Rampe 5 bevorzugt. Die in den Figuren 2 und 3 schematisch dargestellten Rampen werden vorzugsweise an die praktischen Erfordernisse einer Zahnbürste geometrisch angepaßt. So kann die Rampe nicht beliebig flach und der Winkel α oder β nicht ideal stumpf nahe 180° sein, weil sonst eine Borstenbestopfung in einem größeren ebenen Bereich der Außenfläche 4 des Kopfes 1 nicht möglich ist. Auch spielt bei der spezifischen Ausbildung der Rampe die Bestopfungsrichtung der Borsten bzw. Neigung der Borstenbüschel zu dem Kopf und die vorgesehene Putzrichtung des Benutzers eine Rolle.

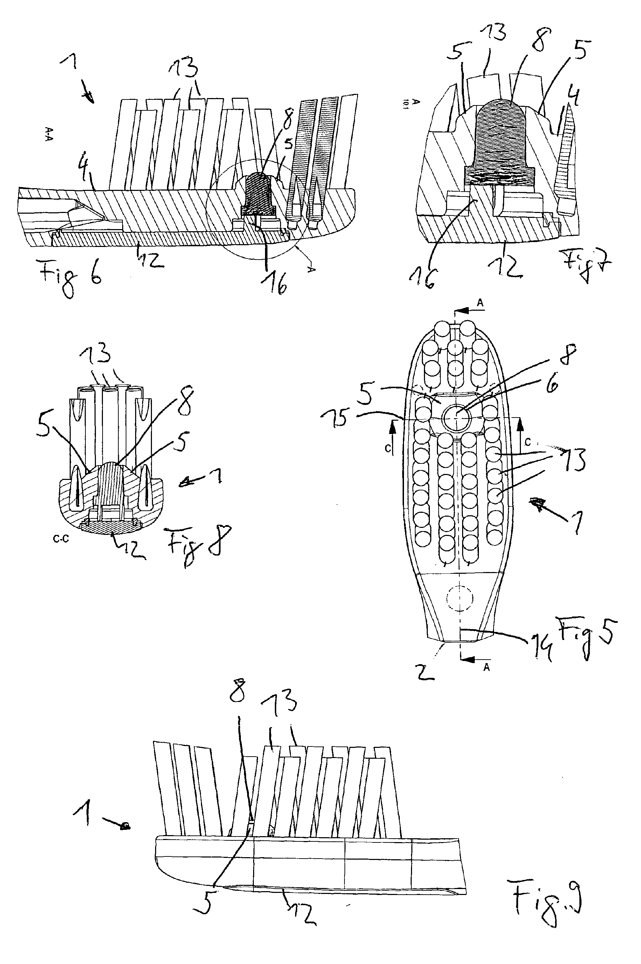

Fig. 4 zeigt einen Längsschnitt durch einen Kopf 1 b. Die Rampe 5 ist auch für diesen Kopf vorgesehen, obwohl sie in dieser Figur nicht dargestellt ist. Mit Fig. 4 wird die Montage des elektrisch betreibbaren Funktionselementes im Kopf 1 b schematisch dargestellt. Als elektrisch betreibbares Funktionselement ist eine LED 8 vorgesehen, deren Anschlußdrähte mit einer Drahtverbindung 10 separat mit einer Umkapselung 9 versehen sind, so daß die elektrischen Anschlußdrähte der LED 8 vor eindringender Feuchtigkeit geschützt sind. Die LED 8 wird von hinten durch den Bürstenkopf durch einen größeren Hohlraum 7 hindurch eingelegt, so daß die Umkapselung 9 ebenfalls im Hohlraum 7 Platz findet. Der elektrische Draht 10 ist durch einen Hohlraum im Hals der Zahnbürste geführt, die den Kopf mit dem Handgriff verbindet. Die LED 8 ist vorzugsweise mit einem Preßsitz in der Montageöffnung 6 eingepreßt. Gemäß dieser Ausführungsform ist sowohl die LED 8 als auch der Kopf 1 b (oder 1) aus einem Hartkunststoff hergestellt, so daß eine geringfügig engere Dimensionierung der Montageöffnung 6 gegenüber dem Außendurchmesser der LED 8 genügt, um diesen Preßsitz zu gewährleisten. Alternativ ist die LED 8 oder der Kopf 1, 1 b zumindest teilweise aus Weichkunststoff, wie z.B. TPE, gebildet. Das Kopfmaterial kann wahlweise transparent oder transluzent ausgebildet sein. Der Kopf 1 B wird nach dem Einsetzen der LED und der Umkapselung 9 von hinten mit einem Deckel 12 (siehe Fig. 6) dichtend verschlossen. Die LED kann auf jede beliebige andere Art und Weise im Kopf befestigt werden. So ist beispielsweise das Umspritzen der LED im Werkzeug, in dem der Kopf 1 gespritzt wird, eine alternative Herstellmethode. Weiterhin alternativ kann die LED eingeschweißt, eingefügt, geklebt oder eingegossen werden. Auch kann die LED (bzw. das Funktionselement) von oben (also von der Borstenebene her) oder zwischen Kopfhälften montiert werden.

Der Deckel 12 weist an einem der LED Rückseite zugewandten Abschnitt im Inneren des Kopfes 1 einen Bereich 16 auf, der in direktem Kontakt mit der LED Rückseite ist. Dieser Bereich ist vorzugsweise als stabförmiger Vorsprung an der Innenseite des Deckels 12 ausgebildet. Somit ist zusätzlich zum Presssitz oder alternativ zu diesem sichergestellt, dass die LED 8 nicht in das Innere des Kopfes 1 eindrückbar ist. Seitenschultern an der gegenüber liegenden Seite der LED bringen diese formschlüssig in Anlage mit Innenabschnitten des Kopfes, so dass die LED 8 auch nicht über diesen Formschluss hinaus aus dem Kopf herausragend angeordnet sein kann.

Ähnliche Varianten sind für die Ausbildung der Rampe 5 möglich. Vorzugsweise ist die Rampe 5 einteilig mit dem Kopf 1 gespritzt. Alternativ ist die Rampe in einem weiteren Spritzgußschritt hergestellt, geklebt, gefügt, geschweißt oder geschnappt. Die Rampe kann entweder aus Hart- oder Weichkunststoff ausgebildet sein.

Fig. 5 zeigt eine Draufsicht auf den Kopf der Zahnbürste nach Fig. 1, bei der die LED 8 in der Montageöffnung 6 eingesetzt ist und die Borstenbüschel 13 in den Öffnungen 3 befestigt sind. Auch bei dieser Darstellung ist von der Zahnbürste nur der Kopf 1 dargestellt, der Hals schließt sich an der Abrisslinie 2 an. Der Hals verbindet wiederum den Handgriff mit dem Kopf der Zahnbürste. Wie aus dieser Draufsicht erkennbar ist, ist der Bereich oberhalb der LED frei von Mundpflegeelementen bzw. Borstenbüschel 13. Dadurch gelangt eine hohe Lichtmenge, gebildet aus der Lichtintensität und dem auszuleuchtenden Bereich ungehindert direkt auf die Zähne bzw. die mit Zahnpasta versehenen Bereich der Zähne. Eine Aktivierung von bestimmten Aktivierungsstoffen in einer speziell für diese Anwendung vorgesehenen Zahnpasta ist somit leichter möglich. Dadurch dass auch die Rampe 5 nicht mit Mundpflegeelementen versehen ist, bildet sich ein ausreichend großer Bereich an den Borstenenden, der den ungehinderten Lichtdurchtritt zulässt, obwohl, wie in dieser Ausführungsform vorgeschlagen, Borstenbüschel geneigt angeordnet sind (siehe Fig. 5 und siehe Seitenansicht Fig. 9). Somit bleibt oberhalb der LED ein Bereich mit einem Durchmesser von 2 bis 6, insbesondere von 3 bis 4 mm frei von Borstenenden. Das von der LED ausgesandte Licht kann mithin ungehindert in einem Lichtkegel von 5 bis 20° austreten.

Die Fig. 6 zeigt einen Längsschnitt durch den Kopf 1 entlang der Linie A-A in Fig. 5. Wie aus dieser Darstellung erkennbar ist, ist die LED mit ihrer vertikalen optischen Hauptachse senkrecht zur Längsachse 14 der Zahnbürste positioniert. Alternativ ist eine, insbesondere zur Längsachse 14 der Zahnbürste winklige Anstellung der LED im Kopf möglich.

Die Fig. 7 zeigt eine Vergrößerung in Fig. 6 innerhalb der Kreislinie A in Fig. 6, um den Bereich der Rampe 5 und der LED vergrößert darzustellen.

Die Fig. 8 zeigt eine Schnittdarstellung durch den Kopf 1 entlang der Linie C-C, die eine Querachse zur Hauptachse 14 der Zahnbürste bildet. Die LED 8 steht gegenüber der planen Bestopfungsfläche bzw. Außenfläche 4 etwa 2 mm über. Die Rampe steht in dieser Ausführungsform gegenüber der planen Bestopfungsfläche bzw. Außenfläche 4 zwischen 1,5 und 2 mm über. Der Steigungswinkel der Rampe beträgt zwischen 30 und 50° oder 20 und 60° (= 180°-α oder 180°-β) gegenüber der Außenfläche 4. Diese Maßangaben können variiert werden. Die Rampe 5 gemäß der Ansichten in Fig. 7 und 8 weist somit schräge Seitenflächen auf (siehe schematisches Beispiel in Fig. 2). Die genauen Dimensionen der Rampe 5 sind in den vier radialen Richtungen um die LED herum unterschiedlich bzw. asymmetrisch ausgebildet, um eine Bestopfung mit Borstenbüschel unmittelbar angrenzend an die Rampe zu ermöglichen. Obwohl die Rampe 5 entlang der Längsachse 14, wie in Fig. 7 dargestellt nicht bis zur Außenfläche 4 der Befestigungsebene der Borstenbüschel 13 herunter reicht, ist bereits eine ausreichende Schutzfunktion für die Zähne gegeben. Dem gegenüber erstreckt sich die Rampe 5 in Querrichtung des Kopfes mit seinen Schrägflächen bis zum unteren Niveau der Außenfläche 4, so dass die Schutzwirkung gegenüber den Zähnen in dieser Ausführung in Querrichtung gegenüber der Schutzwirkung in Längsrichtung entlang der Längsachse 14 erhöht ist. Dies wird u. a. damit begründet, dass in Querrichtung weniger abstützende Borstenbüschel 13 neben der Rampe 5 vorgesehen sind, als in Längsrichtung entlang der Achse 14.

Wie weiter aus Fig. 7 hervorgeht, überragt die LED um wenige Zehntel mm das Niveau der Rampe 5. Durch die abgerundete Form der LED 8 ist dies ohne nachteilige Auswirkung für den Benutzer. In einer Variante ist die LED 8 gegenüber der Montageöffnung 6 so vertikal positioniert, dass sich kein Spalt zwischen der Montageöffnung 6 und der LED innerhalb der Rampe 5 bildet. Die LED 8 kann demnach weiter die Rampe 5 überragend oder tiefer in die Rampe 5 versenkt oder mit der Rampe 5 oben bündig abschließend vertikal entlang der optischen Längsachse der LED 8 positioniert werden. Der optische Abstrahlwinkel durch die LED wird dadurch variiert. Dabei kann die Montageöffnung 6 als lichtrefektierender bzw. lichtleitender Kanal für das von der LED ausgesandte Licht genutzt werden. Dieser Effekt kann noch verstärkt werden, indem der Kunststoff, der die Montageöffnung 6 für die LED 8 umgibt, in weißer Farbe oder noch mit stärker reflektierenden Eigenschaften versehen ist. Somit kann der diffuse Lichtanteil erhöht werden.

Fig. 9 zeigt eine Seitendarstellung des Kopfes 1 nach Fig. 5. In Zusammensicht aus Fig. 5 und 9 ist das Beborstungsmuster dieses Kopfes erkennbar. Zwei Außenreihen der Beborstung sind zum Handgriff geneigt, zwei Innenreihen sind zum distalen Kopfende geneigt, eine vordere Gruppierung von Borsten ist ebenfalls zum distalen Kopfende hin geneigt. Die Rampe 5 kann mit jedem beliebigen anderen Beborstungsmuster kombiniert werden. Auch ist eine Kombination der Rampe in Zusammenhang mit einem Zungenschaber (auf einer Kopfrückseite) möglich.

Der Zahnbürstenkopf wird bevorzugt in folgender Verfahrensreihenfolge oder Teilen davon hergestellt. Spritzen des Bürstenkopfes 1, wobei die Rampe 5 und die übrige Kopfgeometrie aus einer Hartkunststoffkomponente gebildet sind. Als nächstes erfolgt eine Beborstung des Kopfes 1. Es stehen alle bekannten Beborstungsverfahren zur Verfügung. Bevorzugt wird hier die Ankerbestopfung gewählt. Anschließend werden die Borstenenden auf die richtige Länge nachgeschnitten und verrundet. Danach erfolgt die Montage der LED 8 durch die Montageöffnung 6 und der Verschluß des inneren Hohlraumes im Kopf 7 durch den Deckel 12. Der Deckel 12 wird vorzugsweise durch Laserverschweißen, Heitzelementschweißen, Ultraschallschweißen oder andere thermische Anschmelzverfahren mit dem umgebenden Material angeschmolzen, um so eine dichtende Verbindung zu ermöglichen. Andere Verschlußverfahren, wie z. B. durch Schnappverschluß oder Kleben sind ebenfalls möglich.

In einer alternativen Verfahrensweise wird nach Spritzen und Beborsten des Kopfes eine Rampe in die Montageöffnung 6 eingesetzt. Alternativ wird nach Spritzgießen die Rampe eingesetzt und dann der Kopf beborstet. Die Rampe ist in diesem Fall bevorzugt aus einem anderen Material als der Kopf ausgebildet. Danach wird die LED durch die Öffnung 6 eingesetzt.

In einer weiteren alternativen Vorgehensweise wird der Bürstenkopf mit der LED und Verkabelung zusammen gespritzt und anschließend mit Borsten oder anderen Reinigungselementen versehen.

In wiederum alternativer Verfahrensweise wird die Rampe und der übrige Bürstenkopf 1 im Zwei- oder Mehrkomponentenspritzgießverfahren hergestellt. Dabei kann für die Rampe z. B. ein Weichkunststoff und für den Kopf ein Hartkunststoff verwendet werden. Alle oben beschriebenen Verfahrensweisen sind beliebig miteinander kombinierbar.

## Patentansprüche

1. Mundpflegeeinrichtung mit einem Handgriff und einem damit verbundenen oder verbindbaren Kopf (1), an dem Mundpflegeelemente (13), insbesondere Reinigungsborsten und/oder Reinigungselastomer-Elemente, vorgesehen sind, wobei an einer Außenfläche (4) des Kopfes (1) ein elektrisch betreibbares Funktionselement (8) angeordnet ist, **dadurch gekennzeichnet, dass** benachbart zum Funktionselement (8) eine Rampe (5) vorgesehen ist.

2. Mundpflegeeinrichtung nach Anspruch 1, **dadurch gekennzeichnet, dass** das Funktionselement (8) benachbart und/oder zwischen den Mundpflegeelementen (13) angeordnet ist.

3. Mundpflegeeinrichtung nach zumindest einem der vorangegangenen Ansprüche, **dadurch gekennzeichnet, dass** das Funktionselement (8) als eine Licht aussendende Quelle, insbesondere eine LED, Zahnpastaförderer, ein Sensor oder ein Aktuator für z. B. ein Geräusch oder eine Bewegung oder Vibration ausgebildet ist.

4. Mundpflegeeinrichtung nach zumindest einem der vorangegangenen Ansprüche, **dadurch gekennzeichnet, dass** Mundpflegeelemente (13) vorgesehen sind, die auf einem ersten Niveau (4) mit der Außenfläche (4) des Kopfes verbunden sind und das Funktionselement (8) sich bis zu einem zweiten Niveau erstreckt, das zum ersten Niveau (4) unterschiedlich ist und daß die Rampe (5) zumindest einen Teil des Höhenunterschiedes zwischen erstem und zweitem Niveau überbrückt.

5. Mundpflegeeinrichtung nach zumindest einem der vorangegangenen Ansprüche, **dadurch gekennzeichnet, dass** die Mundpflegeelemente (13) auf einer Ebene des Kopfes (1) angeordnet sind und die Rampe (5) zu dieser Ebene schräg oder gewölbt ansteigend oder abfallend ausgebildet ist.

6. Mundpflegeeinrichtung nach zumindest einem der vorangegangenen Ansprüche, **dadurch gekennzeichnet, dass** das Funktionselement (8) teilweise im Kopf (1) und teilweise aus diesem vorspringend angeordnet ist.

7. Mundpflegeeinrichtung nach zumindest einem der vorangegangenen Ansprüche, **dadurch gekennzeichnet, dass** die Rampe (5) und der Kopf (1) aus der gleichen Kunststoffkomponente gespritzt sind.

8. Mundpflegeeinrichtung nach zumindest einem der Ansprüche 1 bis 6, **dadurch gekennzeichnet, dass** die Rampe (5) aus einer anderen Kunststoffkomponente als der Kopf (1) gespritzt ist.

9. Mundpflegeeinrichtung nach Anspruch 8, **dadurch gekennzeichnet, dass** die Rampe (5) aus Weichkunststoff, insbesondere aus Elastomer, und der Kopf (1) aus Hartkunststoff, insbesondere aus PP oder PE, ausgebildet sind.

10. Mundpflegeeinrichtung nach zumindest einem der vorangegangenen Ansprüche, **dadurch gekennzeichnet, dass** die Rampe (5) zumindest in einer radialen Richtung unmittelbar um das Funktionselement (8) herum angeordnet ist.

11. Mundpflegeeinrichtung nach zumindest einem der vorangegangenen Ansprüche, **dadurch gekennzeichnet, dass** das Funktionselement (8) durch Preßsitz im Kopf (1) befestigt ist.

12. Mundpflegeeinrichtung nach zumindest einem der vorangegangenen Ansprüche, **dadurch gekennzeichnet, dass** die Mundpflegeeinrichtung als eine manuelle oder elektrische Zahnbürste und/oder das Funktionselement (8) als LED ausgebildet ist, die im Reinigungsbereich vorspringend angeordnet ist.

13. Mundpflegeeinrichtung nach zumindest einem der vorangegangenen Ansprüche, **dadurch gekennzeichnet, dass** die Mundpflegeelemente auf dem Kopf (1) mit Abstand zum Funktionselement (8) diesem angeordnet sind, so dass ein Freibereich ohne Mundpflegeelemente oberhalb des Funktionselementes vorgesehen ist.

14. Mundpflegeeinrichtung nach zumindest einem der vorangegangenen Ansprüche, **dadurch gekennzeichnet, dass** das Funktionselement (8) und die Rampe (5) einstückig ausgebildet sind.

15. Mundpflegeeinrichtung nach zumindest einem der vorangegangenen Ansprüche, **dadurch gekennzeichnet, dass** das Funktionselement (8) in der zum distalen Ende des Kopfes (1) zugewandten Hälfte angeordnet ist.

16. Mundpflegeeinrichtung nach zumindest einem der vorangegangenen Ansprüche, **dadurch gekennzeichnet, dass** eine Tangente an der schrägen oder gekrümmten oder gewölbten Rampe (5) einen stumpfen Winkel (α, β) mit der Außenfläche (4) einschließt, der zwischen 110 und 170°, vorzugsweise zwischen 120 und 150° liegt.
